# EUROPÄISCHE PATENTANMELDUNG

(11) **EP 1 447 612 A1**
(43) Veröffentlichungstag der Anmeldung: **18.08.2004**
(21) Anmeldenummer: 04002142.0
(22) Anmeldetag: 31.01.2004
(51) Int. Cl.: F16N 29/00, F01M 11/10, F01M 1/18

(54) **Messvorrichtung zur frühzeitigen Erfassung eines Schadens an einem Maschinenteil**

(30) Priorität: 15.02.2003 DE 20302454 U
(71) Anmelder: perma-tec GmbH & Co. KG, 97717 Euerdorf (DE)
(72) Erfinder: Brand, Armin, 97688 Bad Kissingen (DE); Zahner, Michael, 97725 Elferhausen (DE); Weigand, Michael, Dr., 97725 Elferhausen (DE); Graf, Walter, 97717 Euerdorf (DE)
(74) Vertreter: Albrecht, Rainer Harald, Dr.-Ing.

(57) **Zusammenfassung**

Die Erfindung betrifft eine Messvorrichtung (3) zur frühzeitigen Erfassung eines Schadens an einem Maschinenteil (2), das von einem dezentralen elektromechanischen Schmierstoffspender (1) mit Schmierstoff versorgt wird. Sie besteht aus einem Messsensor (4) und einem Messinstrument (5), das eine Leiterplatine mit integrierten Schaltungen, Schnittstellen (6, 7) für den Messsensor (4) und zum Anschluss an eine elektronische Steuerung des Schmierstoffspenders (1) sowie eine Batterie aufweist, die zur Vermeidung von Spannungsabfällen auf der Leiterplatine aufgelötet ist. Der Messsensor weist eine von dem Messinstrument mit Strom versorgte Einrichtung für die Aufnahme analoger Messsignale auf. Ferner ist die Anordnung so getroffen, dass die integrierten Schaltungen die Stromversorgung des Messsensors (4) in vorgegebenen Intervallen lediglich kurzzeitig freigeben und die Stromversorgung nach Erfassung aktueller Messwerte wieder unterbrechen.

## Beschreibung

Die Erfindung betrifft eine Messvorrichtung zur frühzeitigen Erfassung eines Schadens an einem Maschinenteil, das von einem dezentralen elektromechanischen Schmierstoffspender mit Schmierstoff versorgt wird, bestehend aus Messsensor und einem Messinstrument, das eine Leiterplatte mit integrierten Schaltungen, Schnittstellen für den Messsensor und zum Anschluss an eine elektronische Steuerung des Schmierstoffspenders sowie eine Batterie aufweist.

Eine Messvorrichtung mit den eingangs beschriebenen Merkmalen ist aus WO 01/25678 A1 bekannt. Die bekannte Messvorrichtung erlaubt eine zustandsorientierte Instandhaltung eines Wälzlagers ohne Anschluss an ein zentrales Wälzlagerüberwachungssystem. Zu diesem Zweck erkennt die Messvorrichtung einen beginnenden Lagereffekt oder einen Mangelschmierungszustand. Der Schmierstoffspender, an den die Messvorrichtung angeschlossen ist, verzögert durch geeignete, von der elektronischen Steuerung vorgegebene Zusatzschmierungen den Schadensverlauf. Ein erforderlicher Lagerwechsel kann daher im Rahmen langfristig geplanter Instandhaltungsarbeiten durchgeführt werden.

Der Erfindung liegt die Aufgabe zugrunde, eine Messvorrichtung der eingangs beschriebenen Art anzugeben, die autark und stromsparend arbeitet. Darüber hinaus soll die Messvorrichtung in explosionsgeschützten Bereichen einsetzbar sein.

Erfindungsgemäß wird die Aufgabe dadurch gelöst, dass der Messsensor eine von dem Messinstrument mit Strom versorgte Einrichtung für die Aufnahme analoger Messsignale aufweist, dass die integrierten Schaltungen die Stromversorgung des Messsensors in vorgegebenen Intervallen lediglich kurzzeitig freigeben und die Stromversorgung nach Erfassung aktueller Messwerte wieder unterbrechen und dass die Batterie zur Vermeidung von Spannungsabfällen auf der Leiterplatine aufgelötet ist. Die Batterie erlaubt eine autarke Stromversorgung von Messsensor und Messinstrument. Durch die lediglich kurzzeitige Freigabe der Stromversorgung des Messsensors wird eine deutliche Reduzierung des Stromverbrauchs erzielt.

Die Auflötung der Batterie auf die Leiterplatine vermeidet Spannungsabfälle und verhindert die Entstehung von Funken an den Kontaktstellen zwischen Leiterplatine und Batterie, so dass die Messvorrichtung auch in explosionsgeschützten Bereichen einsetzbar ist. Erfindungsgemäß können ohne Batterieaustausch lange Standzeiten von bis zu einigen Jahren erreicht werden.

Die Batterie kann aus einer Lithiumbatterie mit druckdicht verschweißtem Batteriegehäuse bestehen. Lithiumbatterien zeichnen sich durch sehr lange Betriebszeiten aus. Das druckdicht verschweißte Batteriegehäuse verhindert das Eindringen von Luftfeuchtigkeit, die die Funktion der Batterie beeinträchtigen kann.

Ein beginnender Schaden des Maschinenteils kann sich sowohl durch eine erhöhte Reibung zwischen feststehenden und bewegten Komponenten des Maschinenteils als auch durch eine erhöhte Vibration des Maschinenteils äußern. Gemäß einer bevorzugten Ausführung der Erfindung enthält der Messsensor daher einen Halbleiterbaustein für Temperaturmessungen und/oder einen zweiachsigen Sensor für die Aufnahme von Beschleunigungswerten.

Der Messsensor kann mit einem Analog/Digital-Wandler ausgerüstet sein. Dies führt zu einer weiteren Reduzierung des Stromverbrauchs, da die Übertragung digitaler Signale vom Messsensor zum Messinstrument nur einen äußerst geringen Energiebedarf verursacht.

Gemäß einer weiteren bevorzugten Ausführung der Erfindung weist der Messsensor einen IC-Baustein zur Mittelwertbildung der Messsignale auf. Hierdurch wird der Einfluss von kurzzeitigen Extremwerten sowie von Fehlmessungen auf die Schmierstoffversorgung des Maschinenteils reduziert.

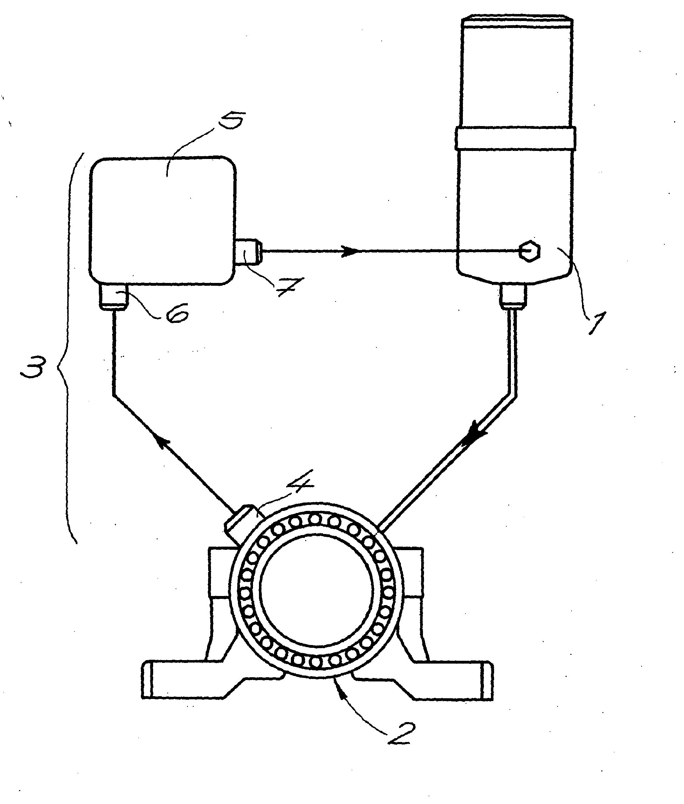

Im Folgenden wird die Erfindung anhand einer lediglich ein Ausführungsbeispiel darstellenden Zeichnung ausführlich erläutert. Die einzige Figur zeigt schematisch eine Vorrichtung zur Schmierung eines Wälzlagers. Die Vorrichtung besteht aus einem dezentralen elektromechanischen Schmierstoffspender 1, der ein Wälzlager 2 mit Schmierstoff versorgt, und einer Messvorrichtung 3 zur frühzeitigen Erfassung eines Schadens an dem Wälzlager 2. Die Messvorrichtung 3 besteht aus einem Messsensor 4 und einem Messinstrument 5, das eine nicht dargestellte Leiterplatte mit integrierten Schaltungen, Schnittstellen 6, 7 für den Messsensor und zum Anschluss an eine elektrische Steuerung des Schmierstoffspenders 1 sowie eine nicht dargestellte Batterie aufweist. Der Messsensor 4 weist eine von dem Messinstrument 5 mit Strom versorgte Einrichtung für die Aufnahme analoger Messsignale auf. Die integrierten Schaltungen geben die Stromversorgung des Messsensors 4 in vorgegebenen Intervallen lediglich kurzzeitig frei, beispielsweise in Intervallen von bis zu einer Stunde für wenige Sekunden. Nach Erfassung aktueller Messwerte unterbrechen die integrierten Schaltungen wieder die Stromversorgung. Diese Maßnahme erlaubt eine deutliche Reduzierung des Stromverbrauches der Messvorrichtung 3. Zur Vermeidung von Spannungsabfällen ist die Batterie auf der Leiterplatine aufgelötet. Dies führt zu einer weiteren Energieeinsparung. Die Messvorrichtung 3 kann durch die erfindungsgemäßen Maßnahmen bis zu mehrere Jahre ohne Batterieaustausch betrieben werden. Aufgrund der Auflötung wird die Gefahr von Funkenbildung an den Kontaktstellen zwischen Batterie und Leiterplatine vermieden, so dass die Messvorrichtung 3 auch in explosionsgeschützten Bereichen einsetzbar ist. Die Batterie besteht aus einer Lithiumbatterie mit druckdicht verschweißtem Batteriegehäuse. Lithiumbatterien sind sogenannte Langzeitbatterien und ermöglichen eine sehr lange Betriebsdauer der Messvorrichtung 3, bevor ein Wechsel der Batterie erforderlich wird. Das druckdicht verschweißte Batteriegehäuse verhindert das Eindringen von Luftfeuchtigkeit, die die Funktion der Batterie beeinträchtigen kann.

Der Messsensor 4 enthält einen Halbleiterbaustein für Temperaturmessungen und einen zweiachsigen Sensor für die Aufnahme von Beschleunigungswerten. Hierdurch können beginnende Lagerschäden frühzeitig erfasst werden, die sich stets durch eine erhöhte Lagerreibung bzw. durch eine erhöhte Vibration des Wälzlagers 2 äußern. Der Messsensor ist mit einem nicht dargestellten Analog/Digital-Wandler ausgerüstet. Der äußerst stromsparende Transport der digitalen Messsignale vom Messsensor 4 zum Messinstrument 5 führt zu einer weiteren Verlängerung der Batterielebensdauer. Der Messsensor 4 weist einen IC-Baustein zur Mittelwertbildung der Messsignale auf. Die Bedeutung von Fehlmessungen bzw. von kurzzeitigen Extremwerten auf die Schmierstoffversorgung wird hierdurch reduziert.

## Patentansprüche

1. Messvorrichtung (3) zur frühzeitigen Erfassung eines Schadens an einem Maschinenteil (2), das von einem dezentralen elektromechanischen Schmierstoffspender (1) mit Schmierstoff versorgt wird, bestehend aus Messsensor (4) und einem Messinstrument (5), das eine Leiterplatine mit integrierten Schaltungen, Schnittstellen (6, 7) für den Messsensor (4) und zum Anschluss an eine elektronische Steuerung des Schmierstoffspenders (1) sowie eine Batterie aufweist, **dadurch gekennzeichnet, dass** der Messsensor (4) eine von dem Messinstrument (5) mit Strom versorgte Einrichtung für die Aufnahme analoger Messsignale aufweist, dass die integrierten Schaltungen die Stromversorgung des Messsensors (4) in vorgegebenen Intervallen lediglich kurzzeitig freigeben und die Stromversorgung nach Erfassung aktueller Messwerte wieder unterbrechen und dass die Batterie zur Vermeidung von Spannungsabfällen auf der Leiterplatine aufgelötet ist.

2. Messvorrichtung (3) nach Anspruch 1, **dadurch gekennzeichnet, dass** die Batterie aus einer Lithiumbatterie mit druckdicht verschweißtem Batteriegehäuse besteht.

3. Messvorrichtung (3) nach Anspruch 1 oder 2, **dadurch gekennzeichnet, dass** der Messsensor (4) einen Halbleiterbaustein für Temperaturmessungen und/oder einen zweiachsigen Sensor für die Aufnahme von Beschleunigungswerten enthält.

4. Messvorrichtung (3) nach einem der Ansprüche 1 bis 3, **dadurch gekennzeichnet, dass** der Messsensor (4) mit einem Analog/Digital-Wandler ausgerüstet ist.

5. Messvorrichtung (3) nach einem der Ansprüche 1 bis 4, **dadurch gekennzeichnet, dass** der Messsensor (4) einen IC-Baustein zur Mittelwertbildung der Messsignale aufweist.
